# EUROPÄISCHE PATENTSCHRIFT

(11) **EP 1 153 451 B1**
(45) Veröffentlichungstag und Bekanntmachung des Hinweises auf die Patenterteilung: **08.01.2003**
(21) Anmeldenummer: 00903506.4
(22) Anmeldetag: 11.01.2000
(51) Int. Cl.: H01M 8/02, H01M 8/24, H01M 8/10

(54) **PEM-BRENNSTOFFZELLE UND VERFAHREN ZU IHRER HERSTELLUNG**
PEM FUEL CELL AND METHOD FOR THE PRODUCTION THEREOF
PILE A COMBUSTIBLE A MEMBRANE ELECTROLYTIQUE POLYMERE ET PROCEDE DE FABRICATION DE LADITE PILE

(30) Priorität: 28.01.1999 DE 19903352
(43) Veröffentlichungstag der Anmeldung: 14.11.2001
(73) Patentinhaber: SIEMENS AKTIENGESELLSCHAFT, 80333 München (DE)
(72) Erfinder: BRÜCKNER, Dieter, D-93049 Regensburg (DE); KLOKE, Wolfgang, D-83104 Tuntenhausen (DE)
(86) Internationale Anmeldenummer: DE0000076
(87) Internationale Veröffentlichungsnummer: WO00045454

(56) Entgegenhaltungen:
- EP-A- 0 397 072
- WO-A-96/17396
- WO-A-96/41392
- PATENT ABSTRACTS OF JAPAN vol. 009, no. 165 (E-327), 10. Juli 1985 (1985-07-10) -& JP 60 039770 A (MATSUSHITA DENKI SANGYO KK), 1. März 1985 (1985-03-01)
- PATENT ABSTRACTS OF JAPAN vol. 014, no. 108 (E-0896), 27. Februar 1990 (1990-02-27) -& JP 01 309264 A (SANYO ELECTRIC CO LTD), 13. Dezember 1989 (1989-12-13)
- PATENT ABSTRACTS OF JAPAN vol. 1998, no. 14, 31. Dezember 1998 (1998-12-31) -& JP 10 261423 A (MATSUSHITA ELECTRIC IND CO LTD), 29. September 1998 (1998-09-29)
- PATENT ABSTRACTS OF JAPAN vol. 018, no. 641 (E-1639), 6. Dezember 1994 (1994-12-06) -& JP 06 251780 A (FUJI ELECTRIC CO LTD), 9. September 1994 (1994-09-09)

## Beschreibung

Die Erfindung betrifft eine PEM-Brennstoffzelle und ein Verfahren zu ihrer Herstellung, wobei der Zusammenbau der Brennstoffzelle durch Ineinanderfügen der Ränder von Membran und Polplatten erfolgt.

Aus der WO 96/41392 A1 ist eine PEM-Brennstoffzelle bekannt, bei der die Grundelemente der PEM-Brennstoffzelle, die Membran mit beidseitiger Elektrodenbeschichtung und die beiden Polplatten durch eine spezielle Klammer zusammengehalten werden.

Bei einer anderen Brennstoffzelle überragt die Membran die beidseitigen Elektroden und wird über ein Dichtungsteil mit der negativen und der positiven Polplatte verbunden, so daß sich zwischen der Membran mit Elektrodenbeschichtung und der jeweiligen Polplatte ein gasdichter Anoden- und/oder Kathodengasraum ausbildet. Daneben ist der JP 60-039770 A eine Brennstoffzelle mit einem Elektrolytträger zwischen zwei Gasseparatoren bekannt, bei der durch beiderseits auf dem Träger und den zugehörigen Separatoren befindlichen Struturierungen ein dichter Verbund erreicht ist. Entsprechend sind bei der EP O 397 072 A 1 für eine Hochtemperatur-Brennstoffzelle mit Feststoffelektrolyt die einzelnen Strukturelemente an den Rändern formschlüssig aufeinandergestapelt, wodurch zu diesem Zweck eine hinreichende Dichtigkeit erreicht ist.

Speziell zur Herstellung von PEM-Brennstoffzellen mit protonenleitfähiger Membran ist aber ein extra Bauteil wie eine Klammer und/oder Dichtung, sowie ein extra Arbeitsschritt zur Montage dieses Teils beim Zusammenbau der Brennstoffzelle erforderlich.

Aufgabe der vorliegenden Erfindung ist es, eine Konstruktion zum Zusammenbau speziell einer PEM-Brennstoffzelle zur Verfügung zu stellen, bei der die Grundelemente der PEM-Brennstoffzelle, also Membran, Elektroden und Polplatten zur Herstellung der Zelle ausreichen. Beim zugehörigen Herstellungsverfahren soll ein Zusammenbau der Grundelemente stattfinden können.

Die Aufgabe ist bei einer PEM-Brennstoffzelle der eingangs genannten Art erfindungsgemäß durch die Merkmale des Patentanspruches 1 gelöst. Weiterbildungen sind in den abhängigen ansprüchen angegeben. Ein Verfahren zur Herstellung der erfindungsgemäßen PEM-Brennstoffzelle ist Gegenstand des Patentanspruches 4.

Bei der Erfindung ist eine Brennstoffzelle, eine Membran mit beidseitiger Elektrodenbeschichtung und jeweils eine negative und positive Polplatte zur Begrenzung des Anoden- und des Kathodengasraumes umfassend, bei der der Rand der Membran und der Rand der beiden Polplatten füreinander geformt sind, so daß beim Zusammenbau die Ränder der beiden Polplatten in den Rand der Membran einhaken und sich jeweils zwischen der Membran und der Polplatte ein dichter Anoden- und Kathodengasraum bildet.

Beim erfindungsgemäßen Verfahren zur Herstellung einer PEM-Brennstoffzelle erfolgt der Zusammenbau der PEM-Brennstoffzelle durch Einhaken der Ränder der beiden Polplatten in den Rand der Membran.

Nach einer vorteilhaften Ausgestaltung der Erfindung ist der Rand der Membran rillen- und/oder U-förmig und die Ränder der beiden Polplatten gleich und ebenfalls rillen- und/oder u-förmig ausgebildet, so daß die obere und die untere Polplatte in die jeweilige Rillenwand des Membranrandes eingehakt werden. Die Membran ist aus abdichtendem Material, so daß durch das Einhaken der Polplatten in die Rille des Membranrandes eine Dichtung entsteht.

Der nut- und/oder rillenförmige Rand der Membran, der sich zur Aufnahme der Polplatten eignet, kann von vorneherein bei der Herstellung der Membran geformt werden oder er kann auf die fertige Membran, eventuell sogar auf die fertige Membran-Elektroden-Einheit aufgespritzt, angeschweißt, angeklebt und/oder nach einer anderen Methode angebracht sein. Der Rand ist mit der Membran bevorzugt unlösbar verbunden.

Der Rand der Polplatte ist bevorzugt in seiner Ausgangsform, d.h. in seiner Form vor dem Zusammenbau der Brennstoffzelle gerade und wird erst beim Fügen der-Elemente umgebogen. Er kann aber auch von Anfang an so gestaltet sein, daß er in einen entsprechenden Membranrand eingeklinkt werden kann. Der jeweilige Rand der Polplatte kann angeschweißt, angeklebt, aufgespritzt und/oder nach einer sonstigen Methode angebracht sein kann.

Bei einer bevorzugten Ausführungsform der Erfindung ist die aus den beiden Polplatten und dem Membranrand gebildete Randabdichtung entlang ihrer Kante mäanderförmig eingeklinkt, so daß die Polplatten in den Hohlraum, der zwischen aktiver Zellfläche, d.h. der mit Elektrode beschichteten Fläche der Membran, und dem u-förmigen Rand der Membran einknicken. Dadurch entsteht eine optimale Randabdichtung.

Im folgenden wird die Erfindung noch anhand zweier Figuren, die eine bevorzugte Ausgestaltung der Erfindung schematisch wiedergeben, erläutert.

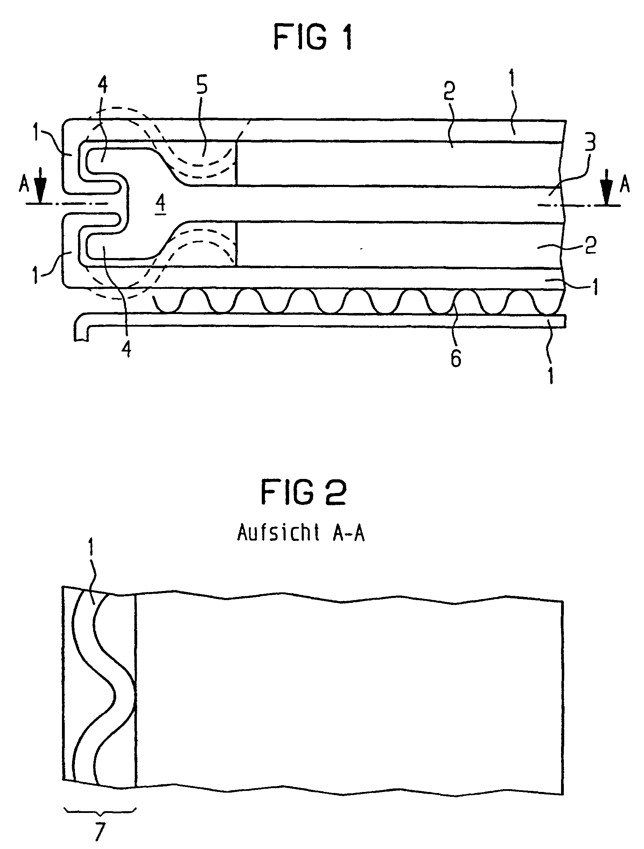

Die Figur 1 zeigt einen Querschnitt durch eine Brennstoffzelle. Die Zelle wird oben und unten jeweils durch eine Polplatte 1 begrenzt. Mittig ist die Membran 3 zu erkennen, die beidseitig eine Elektrode 2 hat. Die Elektroden 2 bedecken nur die aktive Fläche der Membran 3. Zwischen der unteren Polplatte 1 und der oberen Polplatte 1 der nächsten (benachbarten) Brennstoffzelle ist der Kühlkanal 6 gezeigt. Der Rand 4 der Membran 3 ist frei von der Elektrodenbeschichtung und hat eine U-förmige Ausbuchtung, in der die Ränder der Polplatten 1 zur Bildung der Randabdichtung eingehakt werden. Der Rand 4 ist z.B. auf die Membran 3 aufgespritzt. Zur besseren Abdichtung ist die aus Membranrand 4 und den beiden Polplatten 1 gebildete Randabdichtung entlang der Kante mäanderförmig eingeklinkt, d.h. kurvig, wie gestrichelt in Figur 1 angedeutet und in Figur 2 explizit zu sehen ist.

Figur 2 zeigt eine Draufsicht auf den Schnitt A-A aus Figur 1. Entsprechend blickt der Betrachter auf die Membran 3, die nicht wie in Figur 1 ihrer Dicke nach durchgeschnitten wurde, sondern entlang ihrer flächigen Ausdehnung. Im Randbereich 7 blickt man auf die eingehakte untere Polplatte 1. Die Polplatte 1 ist der gezeigten Kante entlang mäanderförmig eingeklinkt, d.h. kurvig gebogen, so daß der Rand, wie in Figur 1 gestrichelt gezeichnet, immer wieder in den Hohlraum 5 zwischen aktiver Fläche mit Elektrode 2 und Membranrand 4 einknickt. Dadurch wird eine optimale Randabdichtung erreicht.

Zur Herstellung der Brennstoffzelle werden die Polpatten 1, die beschichtete Membran 3 und ggf. das Kühlblech 6 lose aufeinandergelegt und dabei durch die Geometrie der einzelnen Teile vorpositioniert. Der Außenrand der Polplatten 1 ist hier in nicht gefügtem Ausgangszustand gerade. Die funktionsfähige Zelle entsteht dann über den Fügevorgang der Einzelteile in Form des "Einklinken" des äußeren Rands der Polplatten 1 in der gezeigten Mäanderform. Damit wird per Formschluß von Polplatte 1 und Membranrand 4 sowohl Gasdichtheit als auch "Stapel-Verbund" der kompletten Zellen ermöglicht. Die einheitliche, symmetrische Form der Polplatten einer Einzelzelle wird dabei beibehalten.

Durch die mechanische-konstruktive Verbindung der beiden Polplatten mit der Membran beim Zusammenbau der Brennstoffzelle entsteht eine Dichtung im Randbereich der Brennstoffzelle, durch die bei Überdruck Gas abgelassen werden kann, die aber ansonsten nach außen hin gasdicht abschließt.

Die Erfindung ist sowohl für die stationäre als auch für die mobile Anwendung der PEM-Brennstoffzelle geeignet.

## Patentansprüche

1. PEM-Brennstoffzelle, eine Membran (3) mit beidseitiger Elektrode (2) und jeweils eine negative und positive Polplatte (1) zur Begrenzung des Anoden- und des Kathodengasraumes als Strukturelemente umfassend, die an ihrem umlaufenden Rand gegeneinander abgedichtet sind, wobei der Rand (4) der Membran (3) und der Rand der beiden Polplatten (1) derart geformt sind, daß die Ränder der beiden Polplatten (1) in den Rand (4) der Membran(3) einhakbar sind und jeweils zwischen der Membran (3) und der Polplatte (1) der dichte Anoden- und Kathodengasraum gebildet ist.

2. PEM-Brennstoffzelle nach Anspruch 1, bei der der Rand (4) der Membran (3) rillenförmig und/oder U-förmig ist.

3. PEM-Brennstoffzelle nach Anspruch 1 oder 2, bei der der Rand aus Polplatten (1) und Membran (3) der Kante entlang mäanderförmig eingeklinkt ist.

4. Verfahren zur Herstellung einer PEM-Brennstoffzelle, nach Anspruch 1 oder einem der Ansprüche 2 bzw. 3, wobei die PEM-Brennstoffzelle aus einer Membran mit beidseitigen Elektroden und jeweils einer negativen und einer positiven Polplatte besteht, **dadurch gekennzeichnet, dass** beim Zusammenbau der Brennstoffzelle ein Einhaken der Ränder der beiden Polplatten in den Rand der Membran erfolgt.

## Claims

1. PEM fuel cell, comprising a membrane (3) with electrodes (2) on both sides and in each case one negative and one positive terminal plate (1) for delimiting the anode gas space and cathode gas space as structural elements, which are sealed with respect to one another at their peripheral edge, the edge (4) of the membrane (3) and the edge of the two terminal plates (1) being shaped in such a manner that the edges of the two terminal plates (1) can be hooked into the edge (4) of the membrane (3), and the sealed anode gas space and cathode gas space is formed in each case between the membrane (3) and the terminal plate (1).

2. PEM fuel cell according to Claim 1, in which the edge (4) of the membrane (3) is grooved and/or U-shaped.

3. PEM fuel cell according to claim 1 or 2, in which the edge comprising terminal plates (1) and membrane (3) is latched together in meandering form along the boundary section.

4. Process for producing the PEM fuel cell according to Claim 1 or one of Claims 2 or 3, in which the PEM fuel cell comprises a membrane with electrodes on both sides and in each case one negative and one positive terminal plate, **characterized in that** during assembly of the fuel cell the edges of the two terminal plates are hooked into the edge of the membrane.

## Revendications

1. Pile à combustible PEM comprenant une membrane (3) ayant une électrode (2) des deux côtés et respectivement une plaque (1) polaire négative et positive de délimitation de la chambre anodique réservée au gaz et de la chambre cathodique réservée au gaz en tant qu'éléments de structure qui sont rendus mutuellement étanches sur leurs bords faisant le tour, le bord (4) de la membrane (3) et le bord des deux plaques (1) polaires étant conformés de façon à ce que les bords des deux plaques (1) polaires puissent s'accrocher dans le bord (4) de la membrane (3) et former respectivement entre la membrane (3) et la plaque (1) polaire, la chambre étanche anodique réservée au gaz et la chambre étanche cathodique réservée au gaz.

2. Pile à combustible PEM suivant la revendication 1, dans laquelle le bord (4) de la membrane est en forme de nervure et/ou en forme de U.

3. Pile à combustible PEM suivant la revendication 1 ou 2, **caractérisée en ce que** le bord constitué des plaques (1) polaires et de la membrane (3) est encliqueté sinueusement le long de l'arête.

4. Procédé de fabrication d'une pile à combustible PEM suivant la revendication 1 ou l'une des revendications 2 et 3, la pile à combustible PEM étant constituée d'une membrane ayant des électrodes des deux côtés et respectivement d'une plaque polaire positive et négative, **caractérisé en ce que** l'on effectue lors de l'assemblage de la pile à combustible un accrochage des bords des deux plaques polaires dans le bord de la membrane.
